# EUROPÄISCHE PATENTANMELDUNG

(11) **EP 2 288 018 A2**
(43) Veröffentlichungstag der Anmeldung: **23.02.2011**
(21) Anmeldenummer: 10180851.7
(22) Anmeldetag: 18.12.1998
(51) Int. Cl.: H02P 9/30

(54) **Verfahren zum Betreiben einer Energie erzeugenden Einrichtung, insbesondere einer Windenergieanlage sowie Windenergieanlage**

(30) Priorität: 19.12.1997 DE 19756777
(62) Teilanmeldung aus: 03025997.2
(71) Anmelder: Wobben, Aloys, 26607 Aurich (DE)
(72) Erfinder: Wobben, Aloys, 26607 Aurich (DE)
(74) Vertreter: Eisenführ, Speiser & Partner

(57) **Zusammenfassung**

Die vorliegende Erfindung betrifft ein Verfahren zum Betreiben einer Energie erzeugenden Einrichtung, insbesondere einer Windenergieanlage mit einem von einem Rotor (4) antreibbaren elektrischen Generator zum Abgeben elektrischer Leistung an einen elektrischen Verbraucher (8), insbesondere ein elektrisches Netz (6).

Die Erfindung betrifft ferner eine Windenergieanlage mit einem Rotor (4) und einem mit dem Rotor (4) gekoppelten elektrischen Generator zum Abgeben elektrischer Leistung an einen elektrischen Verbraucher, insbesondere ein elektrisches Netz (6).

Die Aufgabe der vorliegenden Erfindung besteht darin, ein Verfahren zum Betreiben einer Windenergieanlage sowie eine Windenergieanlage anzugeben, die die Nachteile des Standes der Technik vermeidet und insbesondere Spannungsüberschwankungen beim Verbraucher, insbesondere einem elektrischen Netz sowie eine unerwünschte Abschaltung der Windenergieanlage vermeidet.

Die Erfindung löst die Aufgabe bei einem Verfahren der eingangs genannten Art dadurch, dass die von dem Windenergiegenerator an das Netz (6) abgegebene Leistung in Abhängigkeit von der anliegenden Netzspannung des Versorgungsnetzes geregelt wird, wobei der Generator mit einer elektrischen Steuerungs- und Regelungsanordnung (10) gekoppelt ist, die den in dem Generator erzeugten Wechselstrom zunächst gleichrichtet und anschließend eine Wechselspannung umwandelt, die der Netzfrequenz entspricht.

## Beschreibung

Die vorliegende Erfindung betrifft ein Verfahren zum Betreiben einer Energie erzeugenden Einrichtung, insbesondere einer Windenergieanlage mit einem von einem Rotor antreibbaren elektrischen Generator zum Abgeben elektrischer Leistung an einen elektrischen Verbraucher, insbesondere ein elektrisches Netz.

Die Erfindung betrifft ferner eine Windenergieanlage mit einem Rotor und einem mit dem Rotor gekoppelten elektrischen Generator zum Abgeben elektrischer Leistung an einen elektrischen Verbraucher, insbesondere ein elektrisches Netz.

Bei den bekannten Windenergieanlagen zum Erzeugen elektrischer Energie aus Wind wird der Generator mit dem elektrischen Verbraucher, häufig einem elektrischen Netz im Parallelbetrieb betrieben. Während des Betriebs der Windenergieanlage variiert die von dem Generator bereitgestellte elektrische Leistung in Abhängigkeit von der aktuellen Windgeschwindigkeit und somit der Windleistung. Dies hat zur Folge, dass auch die elektrische Generator-Spannung in Abhängigkeit von der Windleistung variabel ist. Dies führt zu folgenden Problemen:

Im Falle der Einspeisung der erzeugten elektrischen Leistung in ein elektrisches Netz, beispielsweise ein öffentliches Stromnetz, kommt es an einem Verknüpfungs- oder Netzanbindungspunkt, an dem die elektrische Generator-Leistung in das Netz eingespeist wird, zu einer Erhöhung der Netzspannung. Insbesondere bei starken Spannungsänderungen der Generator-Spannung kommt es zu starken, unerwünschten Änderungen der Netzspannung.

Unter besonderen Umständen kann es dazu kommen, dass die Netzspannung im Versorgungsnetz auf einen unerwünscht hohen Wert ansteigt. Dies ist insbesondere dann der Fall, wenn die abgenommene Leistung seitens der Verbraucher sehr gering ist, während in das Versorgungsnetz hohe elektrische Leistung eingebracht wird. Solche Situationen können beispielsweise nachts auftreten, wenn die elektrische Verbrauchsleistung in den Haushalten eher gering ist, während bei starkem Wind von einem Windenergiekonverter eine entsprechend hohe elektrische Leistung dem Versorgungsnetz zur Verfügung gestellt wird. Wenn die Spannung im Versorgungsnetz bzw. am Netzanbindungspunkt der Windenergieanlage über einen vorbestimmten Wert ansteigt, muss die Windenergieanlage bzw. dessen Generator vom Netz abgekoppelt werden und die Windenergieanlage müsste, weil keine Leistung mehr abgenommen werden kann, vom Netz völlig abgeschaltet werden. Eine derartige Abschaltung führt zu einer für den Betreiber der Windenergieanlage und den Betreiber des Netzwerks gleichermaßen unerwünschten Unterbrechung der Einspeisung von elektrischer Leistung.

Aus DE-PS 368 799, DE-OS 44 28 085 sowie DE-OS 30 23 195 ist es allgemein bekannt, dass bei Anlagen, wie Windkraftanlagen oder Solargeneratoren, die vom Generator bereitgestellte Leistung schwankt, was bei der Einspeisung in das Netz 24 zu den oben beschriebenen Problemen führt.

Die Aufgabe der vorliegenden Erfindung besteht darin, ein Verfahren zum Betreiben einer Windenergieanlage sowie eine Windenergieanlage anzugeben, die die Nachteile des Standes der Technik vermeidet und insbesondere Spannungsüberschwankungen beim Verbraucher, insbesondere einem elektrischen Netz sowie eine unerwünschte Abschaltung der Windenergieanlage vermeidet,

Die Erfindung löst die Aufgabe bei einem Verfahren der eingangs genannten Art dadurch, dass die von dem Windenergiegenerator an das Netz abgegebene Leistung in Abhängigkeit von der anliegenden Netzspannung des Versorgungsnetzes geregelt wird.

Bei einer Vorrichtung der eingangs genannten Art wird die Aufgabe gelöst durch eine Regelungseinrichtung mit einem Spannungsaufnehmer zum Aufnehmen einer beim Verbraucher anliegenden elektrischen Spannung z. B. Netzspannung, so dass die von dem Generator an den Verbraucher abgegebene Leistung in Abhängigkeit von der durch den Spannungsaufnehmer aufgenommenen Spannung regelbar ist.

Wie beschrieben, kann es bei Energieerzeugung zur Schwankung der erzeugbaren Energie kommen, was bei Windenergieanlagen abhängig von der Windstärke naturgegeben ist. Diese Schwankungen sind jedoch nicht Ausgangspunkt der Erfindung. Vielmehr beschäftigt sich die Erfindung mit dem Problem, dass es auch auf der Verbraucherseite Schwankungen im Leistungsverbrauch gibt, was sich als schwankende Netzspannung auswirkt. Solche Netzspannungen sind bekanntlich kritisch, weil die elektrischen Geräte - insbesondere Computer - häufig nur ungenügend gegen kritische Spannungsschwankungen gesichert sind. Die Erfindung sieht somit vor, dass nicht nur die Schwankung in der Energieerzeugung auf der Erzeugerseite, sondern auch die Schwankung auf der Verbraucherseite bei der Einspeisung der Energie berücksichtigt wird, so dass die bereitgestellte elektrische Spannung am Einspeisepunkt auf dem gewünschten Sollwert eingeregelt wird.

Die Erfindung vermeidet unerwünschte Schwankungen der beim Verbraucher anliegenden Spannung, insbesondere in einem Netz bestehenden elektrischen Spannung, indem die abgegebene elektrische Leistung des Generators in Abhängigkeit von der Spannung des Verbrauchers bzw. des Netzes eingeregelt wird. Dadurch werden auch unerwünschte Spannungsschwankungen vermieden, die sich aus Änderungen der Windleistung ergeben können.

Ein weiterer Vorteil der Erfindung liegt darin, dass selbst bei sehr starken Änderungen der Windleistung die Windenergieanlage nicht abgeschaltet zu werden braucht, um Netzschwankungen zu verhindern. Erfindungsgemäß wird die Windenergieanlage auch bei starken Änderungen der Windleistung weiterbetrieben, ohne dass Netzspannungsänderungen auftreten. Hierzu ist die erfindungsgemäße Regelungseinrichtung mit Spannungsaufnehmern zum Aufnehmen der am Verbraucher oder dem Netz anliegenden Spannung ausgestattet.

Mit Hilfe der Erfindung können ferner auch bei konstanter Windleistung Netzspannungsschwankungen kompensiert werden, wie regelmäßig in elektrischen Netzwerken zur Elektrizitätsversorgung auftreten, da einige mit dem Netz verbundene Verbraucher zeitweilig große Leistungen aus dem Netz aufnehmen, woraus eine Spannungsreduzierung resultieren kann. Im Falle einer solchen Spannungsreduzierung kann die erfindungsgemäße Windenergieanlage eine erhöhte elektrische Leistung in das Netz einspeisen und auf diese Weise Spannungsschwankungen kompensieren. Hierzu wird beispielsweise auf der Grundlage des erfindungsgemäß aufgenommenen Netzspannungswertes die Einspeisespannung an der Schnittstelle zwischen Windenergieanlage und Netz angehoben.

Gemäß einer bevorzugten Ausführungsform des erfindungsgemäßen Verfahrens wird die abgegebene Leistung geregelt, indem die bereitgestellte elektrische Spannung auf einen gewünschten Sollwert eingeregelt wird. Hierbei kann auf besonders einfache Weise eine Netzspannungskompensation vorgenommen werden, die - wie zuvor beschrieben - beispielsweise auftreten kann, wenn ein an das Netz angeschlossener Verbraucher eine hohe Leistung benötigt.

Gemäß einer weiteren bevorzugten Ausführungsform der Erfindung wird die elektrische Spannung als Wechselspannung mit einer vorgebbaren Frequenz bereitgestellt. Auf diese Weise kann die eingespeiste Leistung an die Zustände im Netz angepasst werden und kann die Netzfrequenz beeinflusst werden. Zweckmäßigerweise entspricht die vorgebbare Frequenz der Netzfrequenz.

Die erfindungsgemäße Windenergieanlage wird in vorteilhafter Weise weitergebildet durch eine Regelungseinrichtung, die einen Mikroprozessor aufweist, da auf diese Weise eine digitale Regelung verwirklicht werden kann.

Die Erfindung wird nachstehend anhand eines Ausführungsbeispiels eines Verfahrens zum Betreiben einer Windenergieanlage unter Bezugnahme auf die Zeichnungen veranschaulicht. Es zeigen:
- Fig. 1: eine in ein Netz einspeisende Windenergieanlage in einer schematischen Darstellung;
- Fig. 2: eine erfindungsgemäße Regelungseinrichtung zum Betreiben einer Wind- kraftanlage;
- Fig. 3: ein Diagramm, das den Zusammenhang zwischen Windleistung und Netz- spannung veranschaulicht;
- Fig. 4: einen wesentlichen Bestandteil der Steuerungs- und Regelungsanordnung aus Fig. 1; und
- Fig. 5: einen zeitlichen Verlauf der Spannungen und Ströme der drei Phasen des Netzes.

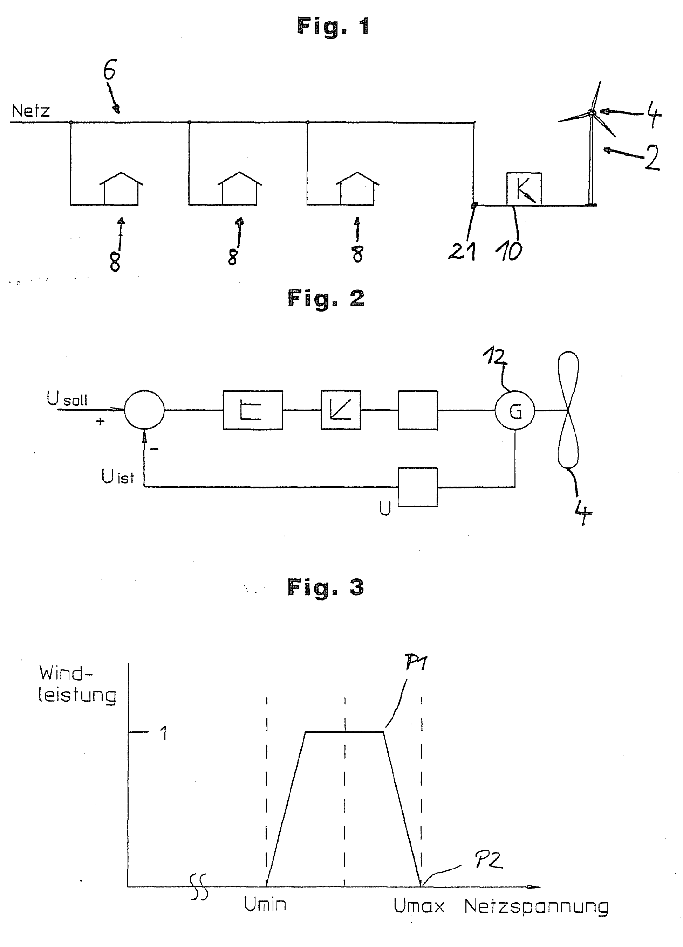

Eine in Fig. 1 schematisch dargestellte Windenergieanlage 2 mit einem Rotor 4 ist mit einem elektrischen Netz 6, das beispielsweise ein öffentliches Netz sein kann, verbunden. An das Netz sind mehrere elektrische Verbraucher 8 angeschlossen. Der in Fig. 1 nicht dargestellte elektrische Generator der Windenergieanlage 2 ist mit einer elektrischen Steuerungs- und Regelungsanordnung 10 gekoppelt, die den in dem Generator erzeugten Wechselstrom zunächst gleichrichtet und anschließend in eine Wechselspannung umwandelt, die der Netzfrequenz entspricht. Anstelle eines Netzes 6 könnte auch ein einzelner Verbraucher von der Windenergieanlage 2 mit elektrischer Energie versorgt werden. Die Steuerungs- und Regelungsanordnung 10 weist eine erfindungsgemäße Regelungseinrichtung auf.

Fig. 2 veranschaulicht die erfindungsgemäße Regelungseinrichtung. Der schematisch dargestellte Rotor 4 ist mit einem Generator 12 gekoppelt, der eine elektrische Leistung bereitstellt, die von der Windgeschwindigkeit und somit der Windleistung abhängt. Die in dem Generator 12 erzeugte Wechselspannung kann zunächst gleichgerichtet und anschließend in eine Wechselspannung umgewandelt werden, die eine der Netzfrequenz entsprechende Frequenz aufweist.

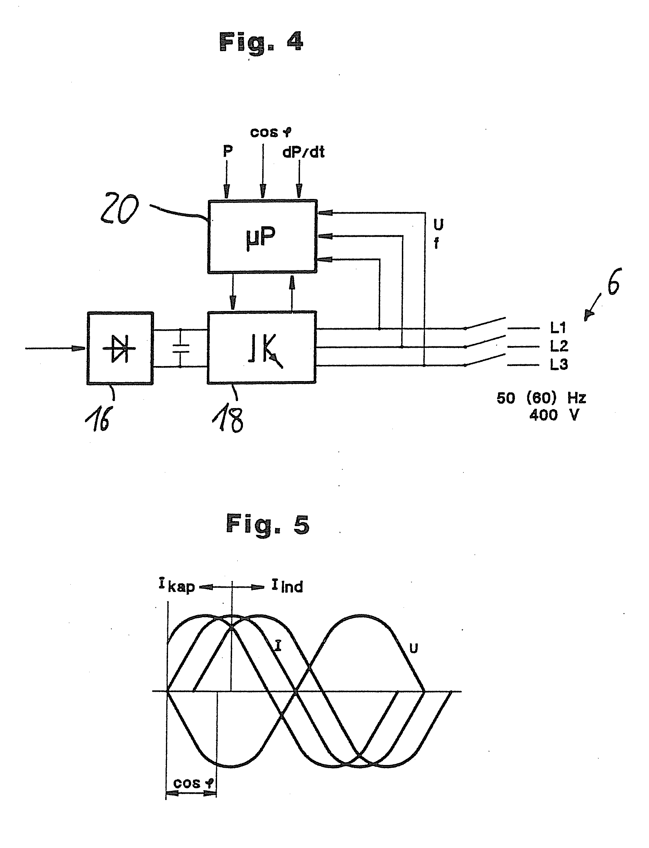

Mit Hilfe eines Spannungsaufnehmers (nicht dargestellt) wird die Netzspannung an einem Ort in dem Netz 6 (Fig. 1) ermittelt. In Abhängigkeit von der ermittelten Netzspannung wird - ggf. mit Hilfe eines in Fig. 4 dargestellten Microprozessors - eine optimale Generator-Spannung Uₛₒₗₗ(vgl. Fig. 2) berechnet. Mit Hilfe der Regelungseinrichtung wird dann die Generator-Spannung Uₗₛₜ auf den gewünschten Spannungswert Uₛₒₗₗ eingeregelt. Durch diese Regelung der Generator-Spannung wird die von dem Generator 12 an einen Verbraucher, im Ausführungsbeispiel das Netz 6, abgegebene elektrische Leistung geregelt, die in das Netz 6 eingespeist wird. Durch eine derartig geregelte Einspeisung der von der Windenergieanlage abgegebenen Leistung können Schwankungen der Netzspannung im Netz 6 vermieden oder erheblich reduziert werden.

Das in Fig. 3 dargestellte Diagramm veranschaulicht den Zusammenhang zwischen der auf der Ordinate aufgetragenen, von der Windenergieanlage abgegebenen Leistung und der auf der Abszisse aufgetragenen Netzspannung. Weicht die Netzspannung nur wenig von ihrem Sollwert ab, der zwischen den Spannungswerten Uₘᵢₙ und Uₘₐₓ liegt, so wird entsprechend dem geraden oberen Abschnitt der Kurve (gerade Linie parallel zur Abszisse) eine gleichbleibende Leistung von dem Generator an das Netz abgegeben. Steigt die Netzspannung weiter an und übersteigt einen Wert, der durch den Punkt P1 definiert ist, so wird die eingespeiste Leistung reduziert. Ist der Wert Uₘₐₓ erreicht, so ist die eingespeiste Leistung gleich Null (Punkt P2). Selbst in dem Fall, dass eine hohe Windleistung vorhanden ist, wird in Punkt P2 keine Leistung in das Netz eingespeist. Sinkt die Windleistung stark ab, so kann nur noch eine reduzierte Leistung in das Netz eingespeist werden. Selbst wenn keine Leistung seitens des Windenergiekonverters mehr abgegeben wird, wird dieser - allerdings ohne Leistungsabgabe - weiterbetrieben, so dass stets eine Leistungsabgabe erfolgen kann, sobald die Netzspannung wieder einen Wert zwischen Uₘᵢₙ und Uₘₐₓ angenommen hat.

Fig. 4, zeigt wesentliche Bestandteile der Steuerungs- und Regelungsanordnung 10 aus Fig. 1. Die Steuerungs- und Regelungsanordnung 10 weist einen Gleichrichter 16 auf, in dem die in dem Generator erzeugte Wechselspannung gleichgerichtet wird. Ein mit dem Gleichrichter 16 verbundener Frequenzumrichter 18 wandelt die zunächst gleichgerichtete Gleichspannung in eine Wechselspannung um, die als dreiphasige Wechselspannung über die Leitungen L1, L2 und L3 in das Netz 6 eingespeist wird. Der Frequenzumrichter 18 wird mit Hilfe eines Mikrocomputers 20, der Teil der gesamten Regelungseinrichtung ist, gesteuert. Hierzu ist der Mikroprozessor 20 mit dem Frequenzumrichter 18 gekoppelt. Als Eingangsgrößen für die Regelung der Spannung, mit der die von der Windenergieanlage 2 zur Verfügung gestellte elektrische Leistung in das Netz 6 eingespeist wird, sind die aktuelle Netzspannung U, die Netzfrequenz f, die elektrische Leistung P des Generators, der Blindleistungsfaktor cos*Φ* sowie der Leistungsgradient dP/dt. In dem Mikroprozessor 20 wird die erfindungsgemäße Regelung der einzuspeisenden Spannung verwirklicht.

Fig. 5 veranschaulicht den zeitlichen Verlauf der Spannungen und Ströme der drei Phasen des Netzes 6.

### Nachfolgend eine Liste weiterer Ausführungsformen der Erfindung.

Ausführungsform 1 Verfahren zum Betreiben einer Windenergieanlage mit einem von einem Rotor antreibbaren elektrischen Generator zum Abgeben elektrischer Leistung an ein elektrisches Netz (6), insbesondere dessen angeschlossene Verbraucher 8, dadurch gekennzeichnet, dass die von dem Generator an das Netz 6 abgegebene Leistung in Abhängigkeit von einer dem Netz 6 anliegenden elektrischen Spannung geregelt wird.
Ausführungsform 2 Verfahren nach Ausführungsform 1, dadurch gekennzeichnet, dass die von dem Generator abgegebene, in das Netz 6 eingespeiste Leistung in Abhängigkeit von einer am Netzeinspeisungspunkt 21 anliegenden elektrischen Spannung geregelt wird.
Ausführungsform 3 Verfahren nach Ausführungsform 1 und/oder 2, dadurch gekennzeichnet, dass die abgegebene Leistung geregelt wird, indem die bereitgestellte elektrische Spannung auf einen gewünschten Sollwert Uₛₒₗₗ eingeregelt wird.
Ausführungsform 4 Verfahren nach Ausführungsform 3, dadurch gekennzeichnet, dass die elektrische Spannung als Wechselspannung mit einer vorgebbaren Frequenz bereitgestellt wird.
Ausführungsform 5 Verfahren nach Ausführungsform 4, dadurch gekennzeichnet, dass die vorgebbare Frequenz im Wesentlichen der Netzfrequenz entspricht.
Ausführungsform 6 Windenergieanlage, insbesondere zur Durchführung eines Verfahrens nach einer der vorstehenden Ausführungsformen, mit einem Rotor 4 und einem mit dem Rotor 4 gekoppelten elektrischen Generator zum Abgeben elektrischer Leistung an ein elektrisches Netz 6, gekennzeichnet durch eine Regelungseinrichtung mit einem Spannungsaufnehmer zum Aufnehmen einer am Netz 6 anliegenden elektrischen Spannung, so dass die von dem Generator an das Netz 6 abgegebene Leistung in Abhängigkeit von der durch den Spannungsaufnehmer aufgenommenen Spannung regelbar ist.
Ausführungsform 7 Windenergieanlage nach Ausführungsform 6, dadurch gekennzeichnet, dass die Regelungseinrichtung einen Mikroprozessor aufweist. Ausführungsform 8 Verfahren zum Betreiben einer energieerzeugenden Einrichtung mit einem elektrischen Generator zum Abgeben elektrischer Leistung an ein elektrisches Netz, insbesondere das der angeschlossenen Verbraucher, wobei die erzeugte Leistung schwankt, dadurch gekennzeichnet, dass die vom Generator an das Netz abgegebene Leistung in Abhängigkeit von einer an dem Netz anliegenden elektrischen Spannung geregelt wird.
Ausführungsform 9 Verfahren und Vorrichtung nach einer der vorhergehenden Ausführungsformen, dadurch gekennzeichnet, dass die Spannung der an das Netz eingespeisten elektrischen Leistung in Abhängigkeit der aktuellen Netzspannung U, der Netzfrequenz f, der elektrischen Leistung des Generators, des Blindleistungsfaktors cos*Φ* sowie des Leistungsgradienten dP/dt geregelt wird.

## Patentansprüche

1. Verfahren zum Betreiben einer Energie erzeugenden Einrichtung, insbesondere einer Windenergieanlage mit einem von einem Rotor antreibbaren elektrischen Generator zum Abgeben elektrischer Leistung an ein elektrisches Netz (6), insbesondere dessen angeschlossene Verbraucher (8),
**dadurch gekennzeichnet, dass** die von dem Generator an das Netz (6) abgegebene Leistung in Abhängigkeit von einer dem Netz (6) anliegenden elektrischen Spannung geregelt wird,
wobei der Generator mit einer elektrischen Steuerungs- und Regelungsanordnung (10) gekoppelt ist, die den in dem Generator erzeugten Wechselstrom zunächst gleichrichtet und anschließend eine Wechselspannung umwandelt, die der Netzfrequenz entspricht.

2. Verfahren nach Anspruch 1,
**dadurch gekennzeichnet, dass** der in dem Generator erzeugte Wechselstrom mittels Gleichrichter (16) gleichgerichtet wird und anschließend mittels eines Frequenzumrichters (18) in die Wechselspannung umgewandelt wird, die der Netzfrequenz entspricht, wobei die Wechselspannung, die der Netzfrequenz entspricht, als dreiphasige Wechselspannung über Leitungen (L1, L2 und L3) in das Netz eingespeist wird und der Frequenzumrichter mittels eines Mikrocomputers (20), der Teil der Regelungsanordnung (10) ist, gesteuert wird, dass der Mikroprozessor (20) mit dem Frequenzumrichter (18) gekoppelt ist und als Eingangsgrößen für die Regelung der Spannung, mit der die von der Windenergieanlage (2) zur Verfügung gestellte elektrische Leistung in das Netz (6) eingespeist wird, die Netzspannung (U), die Netzfrequenz (f), die elektrische Leistung (P) des Generators, der Leistungsfaktor (cos*Φ*) sowie der Netzgradient (dP/dt) vorgesehen sind.

3. Verfahren nach einem der vorhergehenden Ansprüche,
**dadurch gekennzeichnet, dass** dann, wenn die Netzspannung nur wenig von ihrem Sollwert abweicht, eine gleichbleibende Leistung von dem Generator an das Netz abgegeben wird, dass dann, wenn die Netzspannung weiter ansteigt und einen vorbestimmten Wert (P1) übersteigt, die eingespeiste Leistung reduziert wird, dass dann, wenn der Wert Uₘₐₓ erreicht wird, die eingespeiste Leistung gleich Null wird und dass selbst in dem Fall, dass eine hohe Windleistung vorhanden ist, bei Erreichen des Wertes Uₘₐₓ eine Leistung in das Netz eingespeist wird und dass dann, wenn keine Leistung seitens des Windenergiekonverters abgegeben wird, dieser ohne Leistungsabgabe weiter betrieben wird, so dass stets eine Leistungsabgabe erfolgen kann, sobald die Netzspannung wieder einen Wert zwischen Uₘᵢₙ und U_{maX} angenommen hat.

4. Verfahren nach Anspruch 3,
**dadurch gekennzeichnet, dass** dann, wenn die Netzspannung den vorbestimmten Netzspannungswert (P1) übersteigt, die eingespeiste Leistung mit weiter ansteigender Spannung reduziert wird.

5. Verfahren nach Anspruch 4,
**dadurch gekennzeichnet, dass** die Reduktion der Leistung mit ansteigender Spannung zwischen dem vorbestimmten Wert und Uₘₐₓ linear erfolgt.

6. Windenergieanlage, insbesondere zur Durchführung eines Verfahrens nach einem der vorstehenden Ansprüche,
mit einem Rotor (4) und einem mit dem Rotor (4) gekoppelten elektrischen Generator zum Abgeben elektrischer Leistung an ein elektrisches Netz (6),
**gekennzeichnet durch** eine Regelungseinrichtung mit einem Spannungsaufnehmer zum Aufnehmen einer am Netz (6) anliegenden elektrischen Spannung, so dass die von dem Generator an das Netz (6) abgegebene Leistung in Abhängigkeit von der **durch** den Spannungsaufnehmer aufgenommenen Spannung regelbar ist, und
dass die Regelungseinrichtung einen Mikroprozessor (20), einen Gleichrichter (16) und einen Frequenzumrichter (18) aufweist, dass der Gleichrichter (16) mit dem Frequenzumrichter (18) verbunden ist und der Frequenzumrichter die gleichgerichtete Gleichspannung in eine Wechselspannung umwandelt, die über Leitungen (L1, L2, L3) in das Netz eingespeist wird, dass der Frequenzumrichter mit dem Mikroprozessor gekoppelt ist und gesteuert wird und der Mikroprozessor als Eingangsgrößen für die Regelung der Spannung, mit der die von der Windenergieanlage (2) zur Verfügung gestellte elektrische Leistung in das Netz eingespeist wird, die aktuelle Netzspannung (U), die Netzfrequenz (f), die elektrische Leistung (P) des Generators, der Blindleistungsfaktor (cos*Φ*) sowie der Leistungsgradient (dP/dt) vorgesehen sind und dass die Spannung der in das Netz eingespeisten elektrischen Leistung in Abhängigkeit mit der aktuellen Netzspannung (U), der Netzfrequenz (f), der elektrischen Leistung (P) des Generators, des Blindleistungsfaktors (cos*Φ*) sowie des Leistungsgradienten (dP/dt) geregelt wird.
